# EUROPÄISCHE PATENTANMELDUNG

(11) **EP 1 319 754 A1**
(43) Veröffentlichungstag der Anmeldung: **18.06.2003**
(21) Anmeldenummer: 01811214.4
(22) Anmeldetag: 12.12.2001
(51) Int. Cl.: E01F 7/04, F16F 7/12, E02D 17/20, E01F 8/02

(54) **Netzelemente mit grossem Verformungs- und Energieabsorptionsvermögen**

(71) Anmelder: AVT Anker + Vorspanntechnik AG, CH-1712 Tafers (CH)
(72) Erfinder: von Allmen, Hans Peter, 1712 Tafers (CH)
(74) Vertreter: AMMANN PATENTANWAELTE AG BERN

(57) **Zusammenfassung**

Zum Auffangen, Abbremsen und Stoppen bewegter Massen, insbesondere zum Schutz gegen Steinschlag oder Lawinen, werden in den Verbauungen Netze eingesetzt, die aus einzelnen Netzelementen (1) zusammengesetzt werden. Die Netzelemente (1) bilden ein Gitter nach Art eines Flechtwerkes aus sich kreuzenden Stäben (2, 3) und/oder weisen längsverschiebliche Endverbindungen in Form von zusammenziehbaren Schlaufen (5) auf, die in ihrer Endposition die Bruchlast der Stäbe (2, 3) verankern und so die Ausschöpfung von deren plastischem Dehnvermögen ermöglichen. Dadurch können die Netzelemente (1) grossen Verformungen folgen und dabei durch den Widerstand des Flechtwerkes gegen seine geometrische Verformung, das Zusammenziehen der Schlaufen (5) und die plastische Verlängerung der Stäbe (2, 3) kinetische Energie absorbieren.

## Beschreibung

Die Erfindung bezieht sich auf Netzelemente gemäss Oberbegriff der Ansprüche 1 und 7, z.B. in Steinschlag- und Lawinenverbauungen oder bei Barrieren gegen Murgänge (Schlammlawinen in Bachbetten) u.dgl. Die Netzelemente können auch im nicht dynamischen Bereich als Boden- oder Felsabdeckung gegen Erosion, Rutschungen, Materialausbrüche u.dgl. und zur Sicherung von Böschungen verwendet werden.

Der kinetischen Energie von bewegten Massen wird zur Abbremsung Verformungsarbeit der Verbauungen entgegengesetzt, die sich aus den Verformungen und den dazu nötigen Kräften ergibt. Bei hohen Energien sind grosse Verformungen erforderlich. Die Netze müssen diesen folgen können und dabei möglichst viel Energie absorbieren.

Bisher werden für dynamische Zwecke mehrheitlich ; Maschennetze aus Drahtseilen oder Ringnetze aus Stahldrähten verwendet.

Maschennetze aus Drahtseilen (z.B. EP-A-474 910) sind aufwendig in der Herstellung und teuer. Zudem leisten die Seile Verformungsarbeit vorwiegend nur im elastischen Bereich, weil insbesondere die Endverbindungen maximal Kräfte übertragen, die 10 bis 20 % unter der wirklichen Bruchkraft und damit unter der Fliesskraft der Seile liegen.

Die Verbindungsmittel in den Kreuzungspunkten der Seile können weitere namhafte Beiträge zur Energieabsorption nur leisten, wenn sie z.B. als Klemmen ausgebildet sind, die ein definiertes Aneinanderklemmen der sich kreuzenden Seile gestatten, was aber zu einer weiteren Verteuerung der Netze führt.

Ringnetze (z.B. EP-A-679 457) erleiden bis zum Formschluss der lose ineinander geschlauften Ringe grosse Verformungen ohne nennenswerte Aktivierung von Kräften. Anschliessend werden belastete Ringe zu Zwei-, Drei- oder Vierecken verformt, wobei die entsprechende Verformungsarbeit geleistet wird. Ein eigentliches Fliessen des Ringmaterials ausserhalb der Biegestellen kann aber nicht erreicht werden, da die Ringe an diesen Stellen infolge einer kombinierten Beanspruchung aus Zug- und Biegespannungen sowie grossen Querdrücken unterhalb der Fliesskraft versagen.

Besonders bei schwierigen Einbaubedingungen weisen die Netze bzw. Teilnetze, die eine gewisse minimale Grösse aufweisen, um z.B. Verbindungsmittel einzusparen, bezüglich Transport und Montage Probleme auf. Die Einsatzorte sind oft nur schwer oder gar nicht mit Transportmitteln erreichbar, so dass schwere Netze mindestens innerhalb des Einsatzortes zu den eigentlichen Montageorten getragen werden müssen. Für die Montage müssen die Netze ausgebreitet und aufgespannt werden, was Schwierigkeiten bereiten kann, da die Netze wegen ihrer Gelenkigkeit zu ungeordneter Ausbreitung und Verhedderung neigen.

Für nicht dynamische Zwecke sind aus dem Tunnelbau sog. Verzugsmatten bekannt, die als Ausbauelemente verwendet werden. Diese weisen in einer Netzrichtung endseitige Verbindungsstellen auf, die ein Zusammenhängen von Netzelementen gestatten. Die Verbindungsstellen können z.B. in Form von Schlaufen, die sich zu Kreuzknoten zusammenziehen (z.B. DE-A-43 29 525) oder Haken, die in haarnadelförmige Schlaufen mit bremsenden sog. Lastwegteilen eingehängt werden (z.B. DE-A-33 31 395), verformbar ausgestaltet sein.

Diese Verbindungsstellen sind aber insgesamt in ihrer Endposition nicht dazu geeignet, die Bruchlast der Stäbe zu verankern und damit deren plastisches Dehnvermögen auszuschöpfen. Die Netze basieren auf dem Prinzip der Bewehrungsstahlmatten mit einer unteren und einer oberen Lage von sich kreuzenden Stäben, die üblicherweise durch Haftschweissungen miteinander verbunden sind. Grosse Verformungen senkrecht zur Netzebene bedingen ein Verformen der z.B. quadratischen zu rautenförmigen Maschen, was zum Abscheren der Haftschweissungen und damit zur Auflösung des Netzes in eine Ansammlung von losen Stäben führt. Die Schweissstellen können zudem bei starker Biegung der Stäbe z.B. infolge Kerbwirkung zum vorzeitigen Versagen führen.

Eine Aufgabe der Erfindung besteht darin, für aus Stäben zusammengesetzte Netze Verbindungsmassnahmen anzugeben, die bei Belastung des Netzes Energie absorbieren können.

Eine andere Aufgabe der Erfindung besteht darin, ein Netzelement anzugeben, das einfacher transportabel und montierbar ist.

Derartige Netzelemente sind in den unabhängigen Ansprüchen angegeben. Die weiteren Ansprüche geben bevorzugte Ausführungen und Anwendungen an.

Gemäss Anspruch 1 besteht ein solches Netzelement im Wesentlichen aus einem Geflecht von Stäben. Zur Fixierung der Form für Transport und Montagezwecke können zusätzliche Stäbe, z.B. diagonal zwischen je zwei gegenüberliegenden Ecken, vorhanden sein. Diese zusätzlichen Stäbe, wie auch die Stäbe des Netzelements können miteinander zusätzlich über Klemmen, Bindedrähte oder Haftschweissungen verbunden sein, um die Formstabilität zu erhöhen. Diese Verbindungen können zwar auch eine gewisse Energie absorbieren, dürfen aber auch bei Belastung des Netzes brechen.

Gemäss dem zweiten unabhängigen Anspruch sind die Stäbe des Netzelements, die dem Anbringen an Halteseilen oder -stäben oder deren Verbinden von Netzelementen untereinander dienen, an den Enden mit Schlaufen versehen, an denen Verbindungselemente angebracht werden können. Die Schlaufen weisen dabei die Fähigkeit auf, sich bei Belastung unter Energieaufnahme zusammenzuziehen. Durch die auftretende Verformung wird auch dem Gesamtgebilde eine Möglichkeit zur Anpassung an die Form des Körpers gegeben, der auf das Netzelement einwirkt. Bevorzugt soll bei angreifenden Kräften von 25 bis 50% der Bruchkraft der Stäbe durch Zusammenziehen der Schlaufen ein Verformungsvermögen der Stäbe in Richtung der Stabachsen von 5 bis 20% und in der Endposition der Endverbindungen ein plastisches Fliessen von > 5% der Netzelementlänge bzw. -breite möglich sein.

Die weiteren Ansprüche geben bevorzugte Ausführungsformen und Verwendungen an.

Ein solches nach Art eines Flechtwerkes gebildetes Netzelement zeichnet sich im Belastungsfall dadurch aus, dass es infolge des Widerstandes der Stäbe gegen deren gegenseitiges Verschieben und/oder die Verformung der quadratischen zu rautenförmigen Maschen zusätzlich zum Zusammenziehen der Schlaufen der Endverbindungen und der plastischen Verlängerung der Stäbe Energie aufnimmt.

Ein weiterer Vorteil resultiert aus der für die Herstellung des Netzelementes verwendeten Stahlqualität. Während für Drahtseile und Ringe hochfeste Drähte (Zugfestigkeit > 1000 N/mm²) mit den entsprechenden Nachteilen bezüglich Korrosion, Querdruckempfindlichkeit u.dgl. verwendet werden, besteht das Netzelement z.B. aus weichgeglühtem Stahl S550 (SIA 162) mit einer Festigkeit von fₜ ≈ 400 N/mm², der sich durch grosse Duktilität und insbesondere ein Verfestigungsvermögen, also eine Erhöhung der Festigkeit, bei mechanischer Beanspruchung auszeichnet.

Die Verformungen der Stäbe an den Endverbindungen im Bereich der 180°- Abbiegung der zusammenziehbaren Schlaufen bewirken eine solche Verfestigung des weichgeglühten Stahles.

Dadurch kann insbesondere die an den Umlenkungen am Ausgang der Führungsstücke der Schlaufen auftretende kombinierte Beanspruchung aus Zug-, Biege- und Querdruckkräften aufgenommen werden, ohne dass es an dieser Stelle zu einem vorzeitigen Versagen der Stäbe kommt. Somit kann das plastische Fliessvermögen der Stäbe voll ausgeschöpft werden.

Ein bevorzugtes Ausführungsbeispiel der Erfindung ist nachfolgend anhand der Zeichnungen näher erläutert. Es zeigen:
- Fig. 1: einen Grundriss eines geflochtenen Netzelementes;
- Fig. 2: den Schnitt A - A durch das Netzelement in Fig. 1;
- Fig. 3: das Detail einer Endverbindung eines Stabes;
- Fig. 4: den Schnitt B - B durch die Endverbindung in Fig. 3; und
- Fig. 5: die Endverbindung aus Fig. 3 in ihrer Ausgangsposition (gestrichelt gezeichnet) und in ihrer Endposition nach einer Beanspruchung mit voller Ausnützung des Verformungsvermögens der Schlaufe.

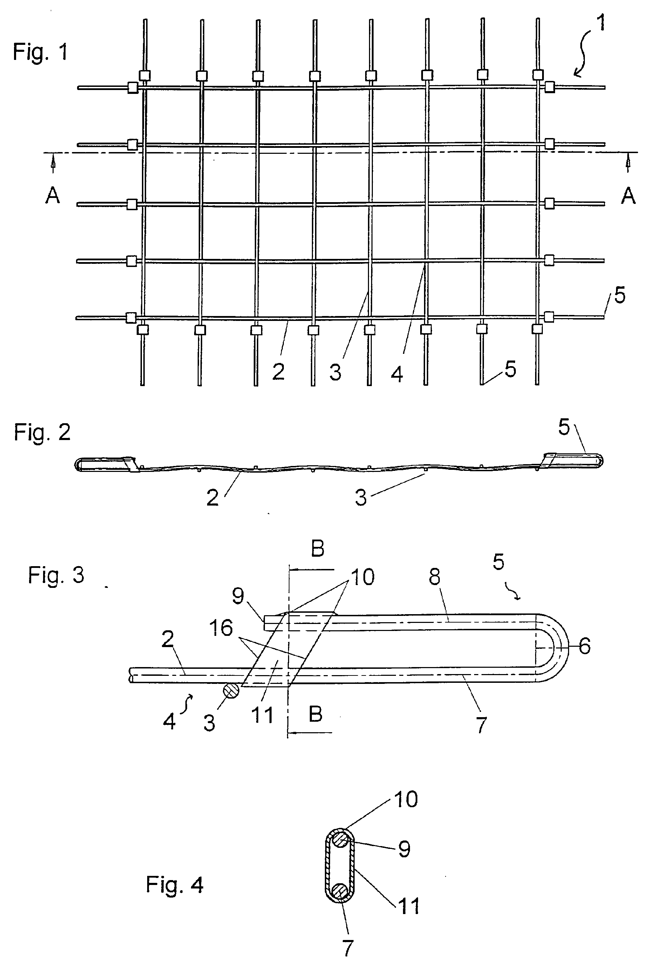

Als Ausgangsbasis für ein Netzelement 1 gemäss Fig. 1 dient ein nach Art eines Flechtwerkes gebildetes Gitter, das aus einer Längslage von Stäben 2 und einer rechtwinklig dazu verlaufenden Querlage von Stäben 3 besteht. Die Stäbe weisen untereinander vorgegebene Abstände auf und sind in den Kreuzungspunkten 4 z.B. mit Bindedrähten in ihrer Lage fixiert.

In Fig. 2 ist der Schnitt A - A durch das Netzelement in Fig. 1 dargestellt, der die beiden Endverbindungen an einem Längsstab 2 in Form geschlossener Schlaufen 5 zeigt.

Die Schlaufe 5 wird entsprechend Fig. 3 durch eine 180°-Abbiegung 6 geformt. Das nach der Abbiegung 6 zurücklaufende Stabstück 8 wird an seinem Ende 9 mit zwei Haftschweissungen 10 mit einem Führungselement 11 verbunden, welches das vor der Abbiegung 6 liegende Stabstück 7 umfasst und längs des Stabstücks 7 frei verschieblich ist, wie Figg. 3 und 4 zeigen. Das Führungselement 11 besteht aus einem FlachovalRohr und weist zwei zur Stabachse schräg verlaufende Kanten 16 auf.

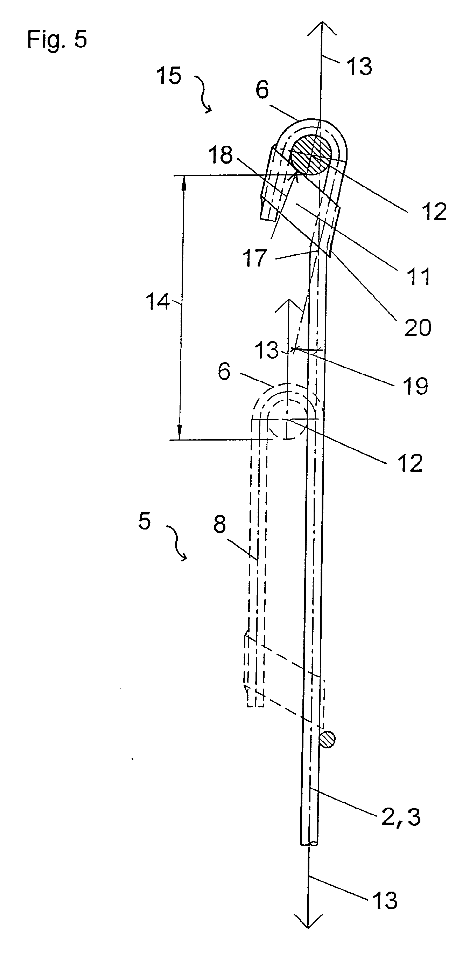

In Fig. 5 sind die Anfangs- 5 und Endposition 15 einer Schlaufe 5 im Belastungsfall dargestellt. Greift an einem von der Schlaufe 5 umfassten Verbindungsmittel 12, wie Schäkel, durch mehrere Endverbindungen hindurchgesteckter Stab oder durchgeflochtenes Seil, bzw. am Stab 2 eine Zugkraft 13 an, zieht sich die Schlaufe 5 zusammen und bewirkt eine Verlängerung 14 des Stabes 2, 3. Dabei wandert die Abbiegung 6 auf dem Stabstück 7, bis schliesslich die Endposition 15 der Schlaufe erreicht ist. In der Endposition 15 hält die Schlaufe die Bruchlast des Stabes 2. Dadurch kann bei entsprechender Grösse der Kraft 13 das plastische Fliessvermögen des Stahles für eine weitere Verlängerung des Stabes 2, 3 voll ausgeschöpft werden. Damit setzt sich die gesamte mögliche Verlängerung des Stabes 2, 3 aus der Verformung der beidseitigen Schlaufen 5, sowie der elastischen und der plastischen Verlängerung des Stabes zusammen. Die dabei absorbierte Energie setzt sich aus der Verformungsarbeit der Schlaufe und dem aus der Verlängerung des Stabes 2, 3 resultierenden Integral der Kraft über den Weg zusammen.

Die geometrische Ausgestaltung des Führungselementes 11 mit zur Stabachse schräg verlaufenden Kanten 16 wirkt in zweifacher Weise positiv auf die Beanspruchung an der Ablenkstelle 17 des Stabes 2. Einerseits greift die Abstützkraft 18 des Führungsstückes 11 exzentrisch am Verbindungsmittel 12 an, weswegen die Wirkungsachse der Zugkraft 13 des Verbindungsmittels 12 nicht durch dessen Mittelpunkt verläuft und der Ablenkwinkel 19 an der Ablenkstelle 17 kleiner wird. Andererseits lässt sich das spitzwinklige Ende 20 des Führungselement 11 leichter verformen als etwa bei zur Stabachse rechtwinklig verlaufenden Kanten und bewirkt dadurch eine Ausrundung der Ablenkstelle 17 und damit eine Verringerung der Konzentration der Beanspruchung des Stabes.

Denkbar ist auch, dass als Führungselement das Stabende selbst zu einer den Stab umfassenden Schlaufe geformt wird oder dass eine vorgefertigte Schlaufe am Stabende befestigt wird.

Weiter kann das Führungselement z.B. als Presshülse ausgebildet werden, so dass es am Stab Reibungskräfte aktiviert und längs nur unter Kraftaufwand verschieblich ist. Dieselbe Wirkung kann auch erzielt werden, indem das Führungselement dem Stab eine plastische Verformung aufzwingt, z.B. durch eine Umlenkung. Dadurch kann weitere Verformungsarbeit zur Absorption von kinetischer Energie der aufgefangenen Massen geleistet werden.

Für die Herstellung eines Netzelementes können z.B. industriell hergestellte Bewehrungsmatten aus Stählen mit Zugfestigkeiten im Bereich von 500 bis 600 N/mm² verwendet werden.

Anstelle oder zusätzlich zu den üblichen Haftschweissungen an den Kreuzungspunkten der Stäbe können zu deren Fixierung mechanische Verbindungselemente, wie Klemmen, Bindedrähte u.dgl. angebracht werden.
Das Netzelement kann auch flächendeckend durch ein aufgelegtes handelsübliches Drahtgeflecht, das mit Bindedrähten befestigt wird, fixiert werden.

Die Stäbe können bezüglich der Netzränder auch diagonal angeordnet werden.

Die Durchmesser und Abstände der Stäbe können innerhalb eines Netzelementes praktisch beliebig variiert und so an vorgegebene Randbedingungen angepasst werden.

Als Korrosionsschutz der Netzelemente kann nötigenfalls eine Beschichtung, wie z.B. eine Feuerverzinkung oder eine Kunststoffbeschichtung aufgebracht werden. Denkbar wäre auch der Einsatz von nichtrostenden Stählen.

Das Führungselement ist bevorzugt mit schrägen Kanten im Winkel von 70° bis 45° zum Teil 7 des Stabs, an dem das Führungselement gleitet, ausgestattet. Besonders bevorzugt ist eine Schräge von 60°.

Denkbar sind weiterhin folgende Abwandlungen:
- zusätzliche Stäbe, die schräg zu den quer zueinander verlaufenden Stäben in die Netzelement eingebunden, insbesondere auch eingewoben sind;
- das Führungselement kann auch nur eine schräge Kante aufweisen und/oder die Schräge der Kanten kann auf den jeweilen wesentlichen Bereich, d. h. den Andruckbereich des Verbindungsmittels 12 im zugezogenen Zustand und/oder den Kontaktbereich mit dem Teil 7, begrenzt sein.

## Patentansprüche

1. Netzelement für das Auffangen und/oder Abbremsen bewegter Massen, **dadurch gekennzeichnet, dass** es aus einer Anordnung im wesentlichen quer zueinander angeordneter Stäbe (2, 3) besteht, die miteinander verwoben sind, insbesondere abwechselnd oberhalb und unterhalb der jeweils quer verlaufenden Stäbe durchgeführt sind, um eine Verformung des Netzelements unter begrenztem Verschieben der Stäbe unter Kraftaufwand zu ermöglichen.

2. Netzelement (1) gemäss Anspruch 1, **dadurch gekennzeichnet, dass** zweite Stäbe eingewoben sind, die schräg zu den ersten Stäben (2, 3) verlaufen.

3. Netzelement (1) gemäss einem der Ansprüche 1 bis 2, **dadurch gekennzeichnet, dass** die Stäbe (2, 3) aus einem Stahl bestehen, der sich bei Verformung verfestigt, insbesondere einem weichgeglühten Stahl.

4. Netzelement (1) gemäss einem der Ansprüche 1 bis 3, **dadurch gekennzeichnet, dass** der Stahl der Stäbe (2, 3) mindestens eine, bevorzugt alle der folgenden Merkmale aufweist:
durch Verformung verfestigbar,
eine Festigkeit von ca. 400 N/mm²; und
eine Dehnung bei Höchstlast von mindestens 5 %.

5. Netzelement (1) gemäss einem der Ansprüche 1 bis 4, **dadurch gekennzeichnet, dass** der Stahl der Stäbe (2, 3) eine Zugfestigkeit von 500 bis 600 N/mm² aufweist.

6. Netzelement (1) gemäss einem der Ansprüche 1 bis 5, **dadurch gekennzeichnet, dass** die Stäbe (2, 3) an einer Mehrzahl von Kreuzungspunkten (4) miteinander verbunden sind, insbesondere durch mindestens eine der Massnahmen:
Haftschweissungen,
Klemmen, und
Bindedrähte.

7. Netzelement (1) für das Auffangen und/oder Abbremsen bewegter Massen, **dadurch gekennzeichnet, dass** es an seinem Rand zur Befestigung mindestens eine Schlaufe (5) aufweist, die im Wesentlichen aus einem stabförmigen Element besteht, das in etwa U-förmig an einer Biegung (6) auf sich selbst zurückgebogen ist und am zurückgebogenen Teil (8) mit einem Führungselement (11) versehen ist, und dass das Führungselement den anderen, ersten Teil (7) beweglich umgreift, so dass die Schlaufe unter Aufwenden einer Kraft, die einen wesentlichen Beitrag zum Abbremsen einer Masse liefern kann, unter Verschieben der Biegung und des Führungselements auf dem ersten Teil zuziehbar ist.

8. Netzelement (1) gemäss Anspruch 7, **dadurch gekennzeichnet, dass** mindestens an einer Seite, bevorzugt an zwei gegenüberliegenden, weiter bevorzugt an drei und insbesondere bevorzugt an allen Seiten eine Mehrzahl von Schlaufen (5) vorhanden ist.

9. Netzelement (1) gemäss einem der Ansprüche 7 bis 8, **dadurch gekennzeichnet, dass** das Führungselement (11) im Wesentlichen ein Rohrstück ist.

10. Netzelement gemäss einem der Ansprüche 7 bis 9, **dadurch gekennzeichnet, dass** das Führungselement (11) eine erste schräge Kante (16) zum Schlaufeninneren hin aufweist, wobei die Kante in einem Winkel von mindestens 70°, bevorzugt mindestens 70° und höchstens 45° und besonders bevorzugt in einem Winkel von etwa 60° zum ersten Teil (7) des stabförmigen Elements verläuft.

11. Netzelement (1) gemäss einem der Ansprüche 7 bis 10, **dadurch gekennzeichnet, dass** die zweite Kante (16) des Führungselements (11), die entgegengesetzt zum Schlaufeninneren liegt, wenigstens im Kontaktbereich zur Umfassung des ersten Teils, bevorzugt insgesamt, schräg zum ersten Teil (7) verläuft, wobei der Winkel der Schräge wenigstens 70°, bevorzugt 70° bis 45° und insbesondere bevorzugt 60° beträgt.

12. Netzelement (1) gemäss einem der Ansprüche 7 bis 11, **dadurch gekennzeichnet, dass** das Führungselement (11) mit dem ersten Teil (7) unter Reibschluss in Wirkverbindung steht, und/oder eine Umlenkeinrichtung für den ersten Teil (7) aufweist, so dass beim Zuziehen das Verschieben auf dem ersten Teil nur unter Kraftaufwand möglich ist.

13. Netzelement (1) gemäss einem der Ansprüche 7 bis 12, **dadurch gekennzeichnet, dass** das zurückgebogene Teil (8) selbst um das erste Teil (7) schlaufenförmig herumgeführt ist, um das Führungselement (11) zu bilden.

14. Netzelement (1) gemäss einem der Ansprüche 7 bis 13, **dadurch gekennzeichnet, dass** es im Wesentlichen aus einer gitterförmigen Anordnung von Stäben (2, 3) besteht.

15. Netzelement gemäss einem der Ansprüche 7 bis 14, **dadurch gekennzeichnet, dass** die Schlaufen (5) aus den freien Enden der Stäbe (2, 3) gebildet sind.

16. Netzelement gemäss einem der Ansprüche 1 bis 6 und gemäss einem der Ansprüche 6 bis 15.

17. Anordnung aus mindestens zwei Netzelementen (1) gemäss einem der Ansprüche 7 bis 16, die an den Kanten im Wesentlichen über die Schlaufen (5) miteinander verbunden sind, um die Gesamtlänge und/oder -fläche zu vergrössern.

18. Verwendung eines Netzelement (1) gemäss einem der Ansprüche 1 bis 16 oder einer Anordnung gemäss Anspruch 18 als Auffangnetz in Steinschlagverbauungen, Lawinenverbauungen und/oder Barrieren gegen Murgänge.

19. Verwendung eines Netzelement gemäss einem der Ansprüche 1 bis 16 oder einer Anordnung gemäss Anspruch 18 als Boden-, Fels- und/oder Böschungsabdeckung zur Sicherung gegen Erosion, Materialrutsche und Materialausbrüche.
